(19) Europäisches Patentamt
European Patent Office
Office européen des brevets

(11) EP 4 350 306 B1

(12) EUROPEAN PATENT SPECIFICATION

(45) Date of publication and mention of the grant of the patent:
**10.12.2025 Bulletin 2025/50**

(21) Application number: **22200445.9**

(22) Date of filing: **07.10.2022**

(51) International Patent Classification (IPC):
***G01G 23/01*** $^{(2006.01)}$ ***G01G 21/26*** $^{(2006.01)}$

(52) Cooperative Patent Classification (CPC):
**G01G 23/01; G01G 21/26**

(54) **WEIGHING SYSTEM AND METHOD FOR DETERMINING AIR DENSITY AND BUOYANCY CORRECTION FOR WEIGHING**

WÄGESYSTEM UND VERFAHREN ZUR BESTIMMUNG DER LUFTDICHTE UND LUFTAUFTRIEBSKORREKTUR BEIM WIEGEN

SYSTÈME DE PESAGE ET PROCÉDÉ DE DÉTERMINATION DE LA DENSITÉ D’AIR ET DE LA CORRECTION DE LA FLOTTABILITÉ DE L’AIR LORS DU PESAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**10.04.2024 Bulletin 2024/15**

(73) Proprietor: **Mettler-Toledo GmbH**
**8606 Greifensee (CH)**

(72) Inventor: **Mueller-Schoell, Christian**
**8307 Ottikon bei Kemptthal (CH)**

(74) Representative: **Mettler-Toledo**
**IP Department**
**Im Langacher 44**
**8606 Greifensee (CH)**

(56) References cited:
**CN-A- 105 258 778**

- **OIML: "Weights of classes E1, E2, F1, F2, M1, M1?2, M2, M2?3 and M3 Part 1: Metrological and technical requirements", OIML R111-1, EDITION 2004 (E) INTERNATIONAL ORGANISATION OF LEGAL METROLOGY, 1 January 2004 (2004-01-01), pages 1 - 80, XP055545204, Retrieved from the Internet <URL:https://www.oiml.org/en/files/pdf_r/r111-1-e04.pdf> [retrieved on 20190121]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 350 306 B1

## Description

### Technical Field

The invention relates to the field of weighing, in particular of weighing in mass calibration and/or weighing laboratories. The invention is in particular, but not only, suitable for private mass calibration and/or weighing laboratories, this means laboratories that are not run by public authorities. National Metrology Institutes, such as NIST (USA), PTB (Germany), NIM (China), LNE (France), NPL (UK) and METAS (Switzerland), are examples of mass calibration and/or weighing laboratories run by public authorities. Industrial mass calibration and/or weighing laboratories are examples of private laboratories.

In particular, the invention relates to weighing and mass calibration, in particular high precision weighing and calibration of weight pieces of higher accuracy, in particular of higher accuracy class according to OIML R 111-1 (2004).

In particular, a method for determining air density, in particular determining air density for air buoyancy determination and correction, a method for determining air buoyancy correction, a related weighing system and a related artefact are provided.

### Background Art

As can be seen from the general weighing equation, the resulting force, F, on any physical body immersed in a gravitational field and in an atmosphere (or liquid), is the directional sum of the gravitational force, G, and the buoyant force, $F_{buoy}$. The gravitational force is dependent on the local gravitational acceleration, g, and the buoyant force is, according to Archimedes' law, the product of the volume, *V,* of the body and the gravitational acceleration, g, and the density, $\rho$, of the surrounding liquid:

$$F = G - F_{buoy} = g * m - \rho * g * V \qquad (1)$$

As the buoyant force is a consequence of the atmosphere being attracted by gravitation, both forces are in exactly opposite directions. This justifies equation (1) to be a scalar difference.

Considering usual bodies, made assumedly from materials with a density in the magnitudes from "water" to "steel", buoyancy forces in air range from approximately a thousandth to a ten-thousandth of their weight force. This is why this force is usually not perceived and there is little awareness of its existence in everyday life. However, in weighing disciplines, the buoyancy force may become meaningful.

In particular in high precision weighing and in calibration of weight pieces of higher accuracy, air buoyancy and its correction is important or even obligatory depending on the laboratory location or the desired accuracy. For this, the determination of air density is necessary.

State-of-the-art high precision weighing and calibration of weight pieces of higher accuracy uses the so-called "3-quantity-method" to determine air density. This method requires the measurement of atmospheric air pressure, air temperature and humidity by corresponding electronic measuring instruments, namely a barometer, a thermometer, and a hygrometer. The measurements are carried out in agreement with legal metrology, in particular as recommended by the International Organization of Legal Metrology (OIML), and the air density is calculated from the CIPM-81/91 formula or an approximative version thereof ("CIPM-81/91-method", for example OIML R 111-1 (2004), Annex E). The "3-quantity-method" for determining air pressure does not involve a step of measuring any weight with a balance.

Since uncertainties related to the measurement of atmospheric air pressure, air temperature and humidity have to be very low, these electronic measuring instruments need to be advanced (thus expensive) and the maintenance effort for these electronic measuring devices, in particular their periodic re-calibration, is high. The latter results further in relevant down-time of the laboratory.

For example, the following uncertainties for air density components when performing E1 class calibrations are suggested in M. Kochsiek, M. Glaeser (eds.), "Comprehensive Mass Metrology", Viley-VCH, Berlin, 2000, in particular table 34.3:

- Atmospheric air pressure: 0.3 mbar
- Temperature: 0.1 K
- Humidity: 2 %RH

Further, the use of four separate measuring instruments, namely the barometer for determining atmospheric air pressure, the hygrometer for determining humidity, the thermometer for measuring the temperature, as well as the balance, is a further source of inaccuracy of the measured weight, for example due to different environmental conditions at the places where these separate measuring instruments are located and/or due to the time that passes between the measurement of atmospheric air pressure, humidity, temperature, and the weighing.

Even further, high precision weighing and calibration of weight pieces of higher accuracy that base on the measurement of humidity and temperature are per se challenging. For example, the presence of a transpiring human influences humidity and the distribution of humidity. Further, air temperature is usually measured with greatest accuracy in a "forced convection" situation (e.g. by ventilation of air against the sensor). Therefore, in traditional ambient temperature measurements (e.g. in meteorology), vented sensors are used and due to the forced convection, self-heating effects can often be neglected. The situation in a high accuracy weighing environment is quite the opposite: There is no (and shall not be) any air movement. So, sensors with a high self-heating effect would give erroneous temperature values.

US 2016/0252388 A1, KR 2018/0011377A and JPS63145922A are examples of documents that disclose weighing systems and methods in which the atmospheric air pressure, air temperature and humidity is measured to determine air density and air buoyancy correction.

National Metrology Institutes (NMIs) sometimes use different approaches for determining air density for air buoyancy correction in calibrating stainless steel 1 kg weights from primary platinum-iridium standards. A. Picard, H. Fang, "Three methods of determining the density of moist air during mass comparisons", Metrologia 39 (2002), 31-40, and J. Berry, S. Davidson, S. Brown, NPL Report Eng 1: The development of artefacts for the gravimetric measurement of the density of moist air, NPL 2007 give an overview of these different approaches.

One of these different approaches used for the Pt-Ir to stainless steel transition calibration is the so-called "gravimetric method" (also called "artefact method"). In this method, a pair of artefacts is used, wherein the artefacts of a pair of artefacts are manufactured from the same material and designed to be as similar as possible with respect to their mass, their surface area and even convection effects that occur at the artefacts surfaces but to have very different volumes. These requirements for the artefacts used by NMIs are essential to avoid an error in the determined air density that is inacceptable for Pt-Ir to stainless steel transition calibration and/or to avoid the determination and implementation of corrections. The method comprises further a step of determining a difference in mass of the two artefacts of the pair of artefacts, wherein the difference in mass is determined by comparison weighing of the two artefacts in a vacuum environment. J. Berry, S. Davidson, S. Brown, NPL Report Eng 1: The development of artefacts for the gravimetric measurement of the density of moist air, NPL 2007 gives an overview of the gravimetric method used by NMIs. CN 105258778A is an example of patent literature that relates to the gravimetric method.

The use of a pair of artefacts of the kind as used by NMIs and the corresponding determination of the air density are not suitable for private laboratories, in particular industrial laboratories. In particular, the procedures used in private laboratories would become much more complex, more demanding, more resource-intense, and hence unprofitable, if the gravimetric method used by NMIs was integrated.

DE 4223981A1 provides a hollow artefact that may help to overcome drawbacks of the "gravimetric method" as used by NMIs. The hollow artefact is designed in a manner that a weight value displayed by a high-resolution scale corresponds to the air mass per litre when the weight of the artefact is compared with a 1 kg reference weight of accuracy class E1 or E2. However, designing and manufacturing of the hollow artefact is complex.

Due to these reasons, there is need for a method for air density determination and/or air buoyancy correction as well as a related weighing system and a related artefact, the method, weighing system and artefact being more suitable than state-of-the-art methods, weighing systems and artefacts.

## Summary of invention

It is an object of the invention to provide a weighing system configured for determining air density, in particular air density for use in determining an air buoyancy correction. In particular (but not exclusively), the weighing system is designed for use in private mass calibration and/or weighing laboratories (in short (private, as the case may be) laboratories), in particular industrial laboratories.

It is a further object of the invention to provide a method for determining air density and a method for determining an air buoyancy correction for use in weighing, wherein the provided methods overcome drawbacks of state-of-the-art methods, for example at least one of the above-mentioned drawbacks. The provided methods are in particular, but not only, suitable for use in private mass calibration and/or weighing laboratories, in particular industrial laboratories.

It is a further object of the invention to provide a method for calibrating weights, in particular calibrating weights of OIML class E1 (and less accurate classes), in particular calibrating weights using a mass comparator.

It is yet a further object of the invention to provide devices related to the provided methods. In particular, it is an object of the invention to provide a weight piece (also called artefact) configured for use in the provided methods. The weight piece is usually provided as a set comprising the weight piece and an electronic or paper data sheet, wherein the data sheet lists characteristics of the weight piece, in particular the characteristics needed for the determination of air density by using the weighing system and/or the method according to the invention.

It is yet a further object of the invention to provide a related computer program, computer-readable signals, and a computer-readable medium.

The invention bases on the insight that the air density can be determined with sufficient accuracy by using a weighing system, in particular an electronic balance, that is suitable with respect to the envisaged accuracy, for example a suitable mass comparator, and two weight pieces having known characteristics, in particular by using an artefact as a first weight piece of the two weight pieces and a calibrated reference weight or dial weight as the second weight piece of the two weight pieces, wherein the artefact is configured for use in the methods according to the invention and the calibrated reference weight or dial weight is available in the mass calibration and/or weighing laboratory anyway, wherein the provided method is advantageous with respect to (economic) efficiency, needed resources and investments, and integrability in established processes. These advantages make the invention in particular suitable for private laboratories.

In summary, the benefits of the methods and weighing system according to the invention are manifold, for example:

- The air density, and hence the buoyancy effect, is measured in exactly the location of interest. In particular, considerations of spatial distribution of temperature, humidity or pressure need not be taken into account.

- The methods require only equipment available even in a private laboratory, apart from the artefact used in the methods. In particular, the weighing system may be a weighing system equipped and operated as a weighing system usually used in a private laboratory, apart from the fact that it is configured further for carrying out the methods in an efficient and user-friendly manner.

- The methods and weighing system employ procedures that are common even to the personnel of a private laboratory, in particular common because the steps of the methods are identical to steps used in substitution weighing methods carried out on a balance, in particular on a mass comparator.

In other words, realization of the invention is resource-efficient in both setting-up and carrying out. Further, the realization of the invention can profit from the high degree of automatization of substitution weighing methods. Therefore, the methods according to the invention can be carried out with a high degree of automatization and in a resource-efficient manner.

In this text, the following terms have the following meanings:

A "mass artefact" (in short "artefact") is a weight piece, this means an element having a mass, wherein the artefact is designed specifically for being measured on a balance for contributing, usually in combination with another (second) weight piece, to the determination of the actual air density. An artefact is different from weight pieces used usually in weighing, such as reference weights, dial weights etc. In particular, an artefact differs in volume and, optionally, in other characteristics such as the material from which it is made, from weight pieces used usually in weighing. However, the characteristics of an artefact are usually designed with respect to a weight piece used usually in weighing.

The meaning of "air" is not restricted to breathing air or the atmosphere in a composition that is naturally occurring on earth. Rather, the term "air" covers any, natural or artificial, air composition in which it is conceivable to carry out weighing.

According to a **first aspect,** the invention provides a weighing system.

The weighing system is a non-vacuum weighing system, this means the weighing system does not comprise a vacuum chamber in which a weighing pan (also called weighing platform) can be arranged. In other words, the weighing system is not configured to carry out weighing in vacuum.

The weighing system comprises a weighing pan (weighing platform). The weighing system is equipped to determine the weight of an object arranged on the weighing pan. In particular, the weighing system is or comprises a balance, in particular an electronic balance, for example a balance that is a mass comparator or that is configured to be run as electronic mass comparator.

In embodiments, the weighing system comprises exactly one load cell.

In an embodiment, the weighing system comprises exactly one weighing pan.

The weighing system comprises a controller. The controller is configured to receive a set of values (parameters, characteristics), wherein the set of values comprises information about a first weight piece and a second weight piece, wherein the first weight piece and the second weight piece have the same nominal weight but differ in surface area and volume by being made of different materials that differ in their density, and wherein the set of values comprises:

- At least two of a first mass value $m_1$ representing the mass of the first weight piece, a first density value $\rho_1$ representing the density of the first weight piece, and a first volume value $V_1$ representing the volume of the first weight piece.

  Usually, the first mass value $m_1$ represents the conventional mass of a first weight piece.

It goes without saying that by receiving two values of said three values, the non-received value can be determined easily.

Usually, the first weighing piece is the mass artefact according to any embodiment disclosed with respect to the second and third aspects of the invention.

- At least one of a second density value $\rho_2$ representing the density of the second weight piece and values sufficient to determine the second density value $\rho_2$, in particular a second mass value $m_2$ representing the mass of the second weight piece and a second volume value $V_2$ representing the volume of the second weight piece.

Usually, the second weight piece is the second weight piece according to any embodiment disclosed with respect to the second and third aspects of the invention.

In an embodiment, the second weight piece is a calibrated reference weight.

In an embodiment, the second weight piece is a weight piece that is an integral part of the weighing system, in particular its balance. In particular, the second weight piece may be a dial weight.

Usually, the second mass value $m_2$, if provided, represents the conventional mass of the second weight piece.

- A first weighing value that is a weighing value of the first weight piece and that is determined, in particular measured, by the weighing system, in particular by arranging the first weight piece on the weighing pan. This also means that the first weighing value is determined in air, more precisely in the air for which the air density is to be determined.
  The first weighing value may be an absolute weighing value $w_1$ or a relative weighing value $\Delta w$.

The controller is configured further to determine the air density $\rho_a$ from the received set of values.

In embodiments, the controller is the controller of a balance, wherein the weighing system is or comprises this balance. Alternatively, the controller is the controller of a remote computer, wherein the balance comprises a communication module for electronic, wired or wireless, data exchange between the controller and the balance of the weighing system. In the latter case, the computer may be part of the weighing system.

In an embodiment, the first weighing value is a relative weighing value with respect to a weighing value of the second weight piece, in particular to an absolute weighing value $w_2$ of the second weight piece. In other words, the first weighing value is given as a difference value $\Delta W$ with respect to a weighing value, in particular an absolute weighing value, of the second weight piece.

According to this embodiment, the difference value $\Delta w$ is determined, in particular measured, by the weighing system. This also means that the difference value is determined in air, in particular in the air for which the air density is to be determined. The difference value $\Delta w$ may be calculated from the absolute first and second weighing values or without determining absolute values of the first and second weighing values.

The difference value may be the determined, in particular measured, difference of conventional mass of the first weight piece and the second weight piece.

Determining the difference value $\Delta w$ comprises usually arranging the second weight piece on a weighing pan of the weighing system or into a load path of the weighing system.

In this embodiment, the controller is configured to determine the air density $\rho_a$ from the received set of values, this means from the at least two of the first mass value $m_1$, the first density value $p_1$, and the first volume value $V_1$, the second density value $\rho_2$ and/or the second mass value $m_2$ and the second volume value $V_2$, and the difference value $\Delta w$.

In an embodiment, the set of values comprises:

- The at least two of the first mass value $m_1$, the first density value $\rho_1$, and the first volume value $V_1$;
- At least two of the second mass value $m_2$, the second density value $\rho_2$, and the second volume value $V_2$;
- The difference value $\Delta w$.

According to this embodiment, the controller is configured to determine the air density $\rho_a$ by using only (apart from constants and/or values representing specific environmental conditions) two, in particular the two comprised in the received set of values, of the first mass value $m_1$, the first density value $\rho_1$, and the first volume value $V_1$, two, in particular the two comprised in the received set of values, of the second mass value $m_2$, the second density value $\rho_2$, and the second volume value $V_2$, and the difference value $\Delta w$.

In an embodiment, the set of values comprises:

- The at least two of the first mass value $m_1$, the first density value $\rho_1$, and the first volume value $V_1$ ;
- At least two of the second mass value $m_2$, the second density value $\rho_2$, and the second volume value $V_2$;
- The difference value $\Delta w$.

According to this embodiment, the controller is configured to determine the air density $\rho_a$ using the following equation or a an equivalent thereof

$$\rho_a = \frac{\rho_1 * (\Delta w - m_1) * (\rho_2 - \rho_0) + \rho_2 * m_2 * (\rho_1 - \rho_0)}{(\Delta w - m_1) * (\rho_2 - \rho_0) + m_2 * (\rho_1 - \rho_0)} \qquad \text{(I)}$$

wherein $\rho_0$ is 1.2 kg/m$^3$.

Any equation that follows directly from equation (I), in particular any equation that follows from equation (I) by simple replacements, for example by using $\rho = m/V$ or $\Delta w = w_i - w_j$ $(i,j = 1,2, i \neq j)$, is considered as an equation that is an equivalent of equation (I).

In an embodiment, the masses used in equation (I) are conventional masses and the difference value $\Delta w$ is the measured difference of conventional mass of the first weight piece and the second weight piece.

In an embodiment, the controller is configured to determine the air density $\rho_a$ by using only:

- Two, in particular the two comprised in the received set of values, of the first mass value $m_1$, the first density value $\rho_1$, and the first volume value $V_1$;
- The second density value $\rho_2$ (or the second mass value $m_2$ and the second volume value $V_2$); and
- The first weighing value being an absolute weighing value $w_1$ of the first weight piece determined by the weighing system.

In an embodiment, the first weighing value is an absolute weighing value $w_1$ of the first weight piece and the controller is configured to determine the air density $\rho_a$ using the following equation or a an equivalent thereof

$$\rho_a = \rho_1 \rho_2 \frac{(m_1 - w_1)}{(m_1 \rho_2 - w_1 \rho_1)} \qquad \text{(II)}$$

wherein $w_1$ is the first weighing value being an absolute weighing value of the first weight piece determined by the weighing system.

In an embodiment, the masses used in equation (II) are conventional masses.

In an embodiment, independent of the values and equation used for determining the air density, the controller is configured further to determining an air buoyancy correction for a sample, this means for a third weighing piece, wherein the air density determined according to any embodiment disclosed is used for determining the air buoyancy correction.

The air buoyancy correction may be determined as disclosed in NIST SOP-2 (2019) publication: Recommended Standard Operating Procedure for Applying Air Buoyancy Correction, or in M. Borys et al. Fundamentals of Mass Determination, Springer, 2012, in particular section 2.5.1, for example.

For determining the air buoyancy correction, the controller may be configured to receive information of the sample, this information being needed for calculating the air buoyancy correction. In particular, the controller may be configured to receive at least one of a sample density value representing the density of the sample and a sample volume value representing the volume of the sample.

In embodiments in which the controller is configured to determine the air buoyancy correction for the sample, the controller may be configured further to correct a weighing value of the sample by the determined air buoyancy correction, wherein the weighing value of the sample is determined, in particular measured, using the weighing system, in particular by arranging the sample on the weighing pan.

In an embodiment, independent of the values and equation used for determining the air density, the weighing system comprises further a Graphical User Interface (GUI).

The GUI may be a GUI of the balance comprised in or constituting the weighing system.

In this embodiment, the weighing system is configured to guide the user, via the GUI, through steps needed for determination of the air density by the controller, in particular needed for providing the values needed by the controller for determining the air density.

In particular, the weighing system may be configured to guide the user through the needed steps in a continued and guided user-weighing system interaction process.

In an embodiment of the weighing system comprising the GUI, the weighing system is configured to run an application on the GUI, wherein the application is configured to at least initiate, by the user, at least the following steps:

- A step of providing the at least two of the first mass value $m_1$, the first density value $\rho_1$, and the first volume value $V_1$ to the controller, wherein the provided values are values of the first weight piece used for determination of the air density. The values may be provided by at least one of the following, for example:

  - Manual input by the user, for example by inputting the values given in a data sheet provided with the first weight piece.

  - Manual or automatic identification of the first weight piece and automatic read out of the values, wherein the values are stored electronically.
    The first weight piece may comprise a machine-readable identifier for automatic identification.

- A step of measuring the first weighing value.

  In particular, the application may be configured to indicate to the user, when the weighing system is ready for weighing the first weight piece and, as the case may be, the second weight piece for determining the first weighing value needed for determining the air density.

  In particular in embodiments in which the second weight piece is not an integral part of the weighing system, weighing of the second weight piece comprises a user action, too.

  The user action related to weighing the first weight piece and, as the case may be, the second weight piece may comprise arranging the corresponding weight piece on the weighing pan or initiating an automatic arranging of the corresponding weight piece on the weighing pan.

In embodiments, in which the weighing system, in particular the controller, is not able to retrieve the values of the second weight piece needed for determining the air density without user input, the application may be configured to at least initiate, by the user, a step of providing the values related to the second weight piece needed for determining the air density, in particular the second density value $\rho_2$ and/or the second mass value $m_2$ and the second volume value $V_2$, or - as the case may be - at least two of the second mass value $m_2$, the second density value $\rho_2$, and the second volume value $V_2$.

For example, the weighing system, in particular the controller, may not be able to retrieve the values of the second weight piece needed for determining the air density in embodiments in which the second weight piece is not an integral part, for example a dial weight, of the weighing system.

In embodiments in which the weighing system, in particular the controller, is configured to determine the air buoyancy correction for a sample, the application may be configured further to at least initiate, by the user, at least one of the following steps:

- A step of providing values of the sample needed for determining the air buoyancy correction, in particular providing the sample density value and/or the sample volume value.
  The values may be provided in the same manner as disclosed with respect to the step of providing the at least two of the first mass value $m_1$, the first density value $\rho_1$, and the first volume value $V_1$.

- A step of weighing the sample.

  In particular, the application may be configured to indicate to the user, when the weighing system is ready for weighing the sample.

  A user action related to weighing the sample may comprise arranging the sample on the weighing pan or initiating an automatic arranging of the sample on the weighing pan.

- A step of applying the air buoyancy correction.

Independent of the embodiment disclosed so far, the weighing system, in particular the controller and, as the case may be, the GUI, may be configured to carry out any step or combination of steps disclosed with respect to the method for determining air density or the method for determining an air buoyancy correction.

In addition or alternatively, the weighing system, in particular the balance, may be configured to cooperate with the set, in particular with the mass artefact, according to any embodiment disclosed.

According to a **second aspect,** the invention provides a method for determining air density, in particular for use in weighing applications, such as mass calibration and/or precise weighing.

The method comprises:

- A step of providing a weighing system, for example a weighing system according to any embodiment disclosed with respect to the first aspect of the invention.

- A step of providing a mass artefact (artefact, in short) as a first weight piece and at least two of a first mass value $m_1$ representing the mass of a first weight piece, a first density value $\rho_1$ representing the density of the first weight piece, and a first volume value $V_1$ representing the volume of the first weight piece.
  The first weight piece, the first mass value $m_1$, the first density value $\rho_1$, and the first volume value $V_1$ may be according to any embodiment disclosed with respect to the first and/or third aspect of the invention.

- A step of providing a second weight piece and at least one of a second density value $\rho_2$ representing the density of a second weight piece and values sufficient to determine the second density value $\rho_2$, in particular a second mass value $m_2$ representing the mass of the second weight piece and a second volume value $V_2$ representing the volume of the second weight piece.
  The second weight piece, the second mass value $m_2$, the second density value $\rho_2$, and the second volume value $V_2$ may be according to any embodiment disclosed with respect to the first aspect of the invention.

- A step of determining a first weighing value that is a weighing value of the first weight piece using the weighing system, wherein the weighing value is determined in the air for which the air density is to be determined.
  The first weighing value may be according to any embodiment disclosed with respect to the first aspect. In particular, the first weighing value may be the absolute weighing value $w_1$ or the relative weighing value $\Delta w$ disclosed with respect to the first aspect of the invention.

- A step of determining the air density $\rho_a$, wherein the at least two of the first mass value $m_1$, the first density value $\rho_1$, and the first volume value $V_1$ provided in the step of providing a mass artefact, the at least one of the second density value $\rho_2$ and the values sufficient to determine the second density value $\rho_2$ provided in the step of providing a second weight piece, and the first weighing value are used in the step of determining the air density.

In the method, the first weight piece and the second weight piece have the same nominal weight but differ in surface area and volume by being made of different materials that differ in their density.

It is an insight and advantage of the invention, that none of the values needed for determining air density needs to be measured in vacuum and that none of the steps of the method needs to be carried out in vacuum. In particular, none of the absolute or relative, as the case may be, mass values needs to be determined in vacuum.

In embodiments, at least one of the following applies:

- The first and second weight pieces differ in volume, this means the first volume value $V_1$ is different from the second volume value $V_2$ by at least 25%, in particular at least 50 % or at least 100 % (this means one weight piece is least twice in volume than the other). For example, one of the first and second volume value is between 2 and 4 times the other of the first and second volume value, in particular between 2.5 and 3.5 times, for example around 3 times.
  In an embodiment, it is the first weight piece that is larger in volume than the second weight piece.

- The first and second weight pieces are made of different materials that differ in density in a manner that the above-mentioned difference in volume can be achieved with a first and second weight piece having the same nominal weight.

- The second weight piece is a reference weight, in particular a calibrated reference weight, that is separate from the weighing system, in particular separate from the balance of the weighing system.
  Alternatively, the second weight piece may be an integral part of the weighing system, in particular a dial weight.

- The first weight piece is a massive body. In particular, the first weight piece is neither hollow, nor does it comprise a hollow region, nor does it comprise, apart from handling features that may be present optionally, such as a lifting knob, a recess or recesses that is/are substantial, for example substantial with respect to a basic shape of the first weight piece, such as a cylinder, a cuboid or the like.

For example, the first weight piece may be designed like a reference weight, in particular a non-adjusting, massive reference weight of nominal value from 1 g to 50 kg, for example as described in section 6.3 and Annex A of OIML R 111-1 (2004).

Alternatively or in addition, the first weight piece may be fabricated by processing a single piece of material, wherein the material is the material of the first weight piece and wherein the processing is an external processing only, this means a processing of external surfaces of the piece of material, only. For example, the first weight piece may be fabricated by external processing of a monobloc.

Alternatively or in addition, the first weight piece may be one-piece, this means a monobloc.

The second weight piece may also be a massive body. This is in particular the case if the second weight piece is a reference weight, in particular a calibrated reference weight, that is separate from the weighing system.

- The first and second weight pieces differ in surface area by a factor of at least 1.1, for example at least 1.2, 1.5 or at least 2.
  For example, the first and second weight pieces may differ in surface area as it results from having the same, massive design, for example the design of a non-adjusting, massive reference weight, and differing **in** volume as indicated above.

- The first mass value $m_1$ is smaller than a maximum capacity of the weighing system, **in** particular its balance.

  For example, the nominal value of the first weight piece may correspond to a nominal value used **in** sets of (reference) weights for weight sequences, such as $1x10^n$ kg, $2x10^n$ kg and $5x10^n$ kg, $n \in \{\cdots, -2, -1, 0, 1, 2, \cdots\}$. Thereby, the nominal value to which the nominal value of the first weight piece corresponds may be the value that is at least half of the largest nominal value of a corresponding set of (reference) weight that is smaller than the maximum capacity of the weighing system.

  For example, if the weighing system is a 1 kg weighing system, the first mass value may be 500 g. For example, if the weighing system is a 5 g weighing system, the first mass value may be 2 g.

  In an embodiment, the first mass value is half of the maximum capacity of the weighing system or less.

As indicated **in** the above list, some of the features given by the bullet points are linked. Therefore the first and second weight pieces differ **in** volume, for example as indicated above, are made of different material, and differ **in** surface area, for example as indicated above.

In addition, the first weight piece, this means the artefact, may be a massive body.

In an embodiment, the first weight piece is a massive body that differs **in** volume from the second weight piece as indicated above.

Independent of the concrete realization of the first and second weight pieces, the air density may be determined **in** the step of determining the air density according to any embodiment disclosed with respect to the first aspect of the invention.

In particular, at least one of the following may apply:

In an embodiment, the step of determining a first weighing value comprises determining a difference value $\Delta w$ with respect to a weighing value of the second weight piece, wherein the difference value is determined using the weighing system. In this embodiment, the difference value is used **in** the step of determining the air density.

The difference value and its determination, as well as its use for determining the air density may be according to any embodiment disclosed with respect to the first aspect, **in** particular according to any embodiment of the corresponding feature of the weighing system.

In an embodiment, the step of providing a second weight piece comprises providing at least two of the second mass value $m_2$, the second density value $\rho_2$, and the second volume value $V_2$, and wherein only two of the first mass value $m_1$, the first density value $\rho_1$, and the first volume value $V_1$, two of the second mass value $m_2$, the second density value $\rho_2$, and the second volume value $V_2$, and the difference value $\Delta w$ are used **in** the step of determining the air density.

The values provided **in** this embodiment as well as their use for determining the air density may be according to any embodiment disclosed with respect to the first aspect, **in** particular according to any embodiment of the corresponding feature of the weighing system.

In an embodiment, the step of providing a second weight piece comprises providing at least two of the second mass value $m_2$, the second density value $\rho_2$, and the second volume value $V_2$, and wherein the following equation or an equivalent thereof is used **in** the step of determining the air density $\rho_a$

$$\rho_a = \frac{\rho_1 * (\Delta w - m_1) * (\rho_2 - \rho_0) + \rho_2 * m_2 * (\rho_1 - \rho_0)}{(\Delta w - m_1) * (\rho_2 - \rho_0) + m_2 * (\rho_1 - \rho_0)} \quad (I)$$

wherein $\rho_0$ is 1.2 kg/m$^3$.

The values provided in this embodiment, the use of the equation and the meaning of "an equivalent of equation (I)" may be according to any embodiment disclosed with respect to the first aspect, in particular according to any embodiment of the corresponding feature of the weighing system.

In particular, the masses used in equation (I) are conventional masses and the difference value $\Delta w$ is the measured difference of conventional mass of the first weight piece and the second weight piece, in an embodiment.

In an embodiment, only two of the first mass value $m_1$, the first density value $\rho_1$, and the first volume value $V_1$, the second density value $\rho_2$ or the second mass value $m_2$ and the second volume value $V_2$, and the first weighing value being an absolute weighing value $w_1$ of the first weight piece determined by the weighing system and in air are used in the step of determining the air density.

The values provided in this embodiment, the determination of the absolute weighing value $w_1$ as well as the use of the provided values may be according to any embodiment disclosed with respect to the first aspect, in particular according to any embodiment of the corresponding feature of the weighing system.

In an embodiment, the following equation or an equivalent thereof is used in the step of determining the air density $\rho_a$

$$\rho_a = \rho_1 \rho_2 \frac{(m_1 - w_1)}{(m_1 \rho_2 - w_1 \rho_1)} \quad (II)$$

The use of the equation as well as the meaning of "an equivalent of equation (II)" may be according to any embodiment disclosed with respect to the first aspect, in particular according to any embodiment of the corresponding feature of the weighing system.

In particular, the masses used in equation (II) are conventional masses.

In an embodiment, the method comprises at least one of the steps disclosed with respect to the GUI and/or a step of providing a GUI according to any embodiment disclosed with respect to the first aspect of the invention.

The method for determining air density according to any embodiment disclosed may be part of a method for determining an air buoyancy correction.

In other words, the invention relates further to a method for determining an air buoyancy correction, wherein the method comprises determination of air density $\rho_a$ according to any embodiment of the method for determining air density.

In an embodiment, the method for determining an air buoyancy correction comprises the use of a weighing system according to any embodiment disclosed.

Independent of the embodiment disclosed so far, the method for determining air density or, as the case may be, the method for determining an air buoyancy correction, may comprise any step or combination of steps disclosed with respect to the weighing system or the set.

Alternatively or in addition, the method for determining air density or, as the case may be, the method for determining an air buoyancy correction may comprise a step or a combination of steps that correspond to features disclosed with respect the weighing system or the set.

According to a **third aspect,** the invention provides a set comprising a mass artefact and a data sheet of the mass artefact.

The set is for use in the method for determining air density according to any embodiment disclosed and/or for use in the method for determining an air buoyancy correction according to any embodiment disclosed.

The mass artefact and the values of the mass artefact provided in the data sheet may be according to any embodiment disclosed with respect to the first weight piece. In particular, a nominal mass of the mass artefact corresponds to a nominal mass of at least one of a reference weight and a dial weight, wherein the volume and surface area of the mass artefact differ from the volume and surface area of the reference weight or dial weight having the same nominal mass by being made of a material that differs in its density from the density of the material the reference weight or dial weight is made of.

In particular, the data sheet comprises a first mass value $m_1$ representing the mass of the mass artefact and a first density value $p_1$ representing the density of the mass artefact, wherein the first mass value is determined in air. The first mass value may represent the conventional mass of the mass artefact, in embodiments.

The data sheet may be a paper data sheet and/or an electronic data sheet.

The data sheet may be stored remotely.

The data sheet may be a calibration certificate.

In an embodiment, the mass artefact is a massive body.

The meaning of "massive body" is as disclosed above with respect to the method for determining air density.

In an embodiment, the mass artefact is made of a material different from stainless steel and Pt-Ir.

For example, the mass artefact may be made of an aluminum or titanium alloy, or from glass.

For example, the mass artefact may be made of an aluminum alloy of the Anticorodal® family, such as AlSi1MgMn. Then, the mass artefact is about three times in volume compared to a stainless steel reference weight of the same nominal mass.

In an embodiment, a nominal mass of the mass artefact corresponds to a nominal mass of at least one of a calibrated reference weight and a dial weight.

For example, the nominal mass of the mass artefact may be $1x10^n$ kg, $2x10^n$ kg or $5x10^n$ kg, $n \varepsilon \{\cdots, -2, -1, 0, 1, 2, \cdots\}$.

In an embodiment, the volume of the mass artefact (first volume value) differs from the volume of the reference or dial weight (second volume value) by at least 25%, in particular at least 50 % or at least 100 %. For example, one of the volume of the mass artefact and the volume of the reference or dial weight is between 2 and 4 times the other of the volume of the mass artefact and the volume of the reference or dial weight, in particular between 2.5 and 3.5 times, for example around 3 times.

In embodiments, it is the volume of the mass artefact that is larger than the volume of the reference or dial weight.

In an embodiment, the surface area of the mass artefact and the surface area of the reference or dial weight may differ by a factor of at least 1.1, for example at least 1.2, 1.5 or at least 2.

In embodiments, it is the surface area of the mass artefact that is larger than the surface area of the reference or dial weight.

Independent of the embodiment disclosed so far, the mass artefact and values comprised in the data set may be according to any embodiment of the first weight piece disclosed with respect to the weighing system, the method for determining air density and the method for determining an air buoyancy correction.

The invention concerns further a computer program comprising instructions which, when the program is executed by a computer cause the computer to carry out at least one of the step of determining the air density according to any embodiment disclosed, a step of determining and, as the case may be, applying, an air buoyancy correction according to any embodiment disclosed, and a step of running the application on a GUI according to any embodiment disclosed.

The invention concerns further a reproducible computer-readable signal encoding the computer program that, when loaded and executed on a computer, causes the computer to carry out at least one of the step of determining the air density according to any embodiment disclosed, a step of determining and, as the case may be, applying, an air buoyancy correction according to any embodiment disclosed, and a step of running the application on a GUI according to any embodiment disclosed.

The invention concerns further a computer-readable medium having stored thereon instructions which, when executed by a computer cause the computer to carry out at least one of the step of determining the air density according to any embodiment disclosed, a step of determining and, as the case may be, applying, an air buoyancy correction according to any embodiment disclosed, and a step of running the application on the GUI according to any embodiment disclosed.

The invention concerns further a data carrier signal carrying instructions which, when executed by a computer cause the computer to carry out at least one of the step of determining the air density according to any embodiment disclosed, a step of determining and, as the case may be, applying, an air buoyancy correction according to any embodiment disclosed, and a step of running the application on a GUI according to any embodiment disclosed.

The invention concerns further a method for manufacturing a non-transitory computer readable medium, comprising the step of storing, on the computer readable medium, computer-executable instruction which, when executed by a processor of a computing system cause the computing system to perform at least one of the step of determining the air density according to any embodiment disclosed, a step of determining and, as the case may be, applying, an air buoyancy correction according to any embodiment disclosed, and a step of running the application on the GUI according to any embodiment disclosed.

**Brief description of drawings**

The subject matter of the invention will be explained in more detail in the following text with reference to exemplary embodiments which are illustrated in the attached drawings. The drawings show:

Fig. 1 An exemplary embodiment of two pairs of a first weight piece (mass artefact) and a second weight piece;
Fig. 2 An exemplary embodiment of a weighing system;

Fig. 3 A schematic view of elements of a weighing system capable for determining air density;
Fig. 4 A flow chart of an exemplary embodiment of a method for determining air density;
Fig. 5 A more detailed flow chart of an exemplary embodiment of a method for determining air density;
Fig. 6 A more detailed flow chart of a further exemplary embodiment of a method for determining air density; and
Fig. 7 A comparison of values of air density determined by a method according to the invention and the 3-quantity-method.

**Description of embodiments**

**Fig. 1** shows an exemplary embodiment of two pairs of a first weight piece 11 (mass artefact) and a second weight piece 12. The nominal mass of the pair of smaller weight pieces is 2 g and the nominal mass of the pair of larger weight pieces is 500 g.

In the embodiment shown, the second weight pieces 12 are calibrated reference weight pieces made of stainless steel.

In the embodiment shown, the mass artefacts 11 are massive cylinders made of Anticorodal®.

**Fig. 2** shows an exemplary embodiment of a weighing system 1 configured for use in a method for determining air density and, as the case may be, for determining and optionally applying an air buoyancy correction according to any embodiment disclosed. Whether the air density and, as the case may be, the air buoyance correction is/are determined, and the latter optionally applied to a sample by the shown weighing system depends on the configuration of its controller 3. Said determination(s) and application may be carried out remotely, in principle even manually.

However, in an embodiment, the controller 3 of the weighing system 1 is configured to receive the input values (set of values) needed for carrying out the step of determining the air density according to any embodiment disclosed and it is configured, in particular programmed, to carry out this step. Further, the controller may be configured to receive the input values needed for determining the air buoyancy correction for a sample and it may be configured, in particular programmed, to determine the air buoyancy correction and, optionally, to apply it.

In the embodiment shown in Fig. 2, the weighing system 1 is an electronic balance, more precisely a mass comparator (Mettler-Toledo's AX1004 is shown), comprising a single weighing pan 2, a GUI 4, a controller 3 (not visible in Fig. 2), a memory 5 (not visible in Fig. 2) and data communication means 6 (not visible in Fig. 2).

**Fig. 3** is a schematic view of basic elements of a weighing system 1, the elements being needed for the weighing system being capable to determine air density and an air buoyancy correction according to any embodiment of the method for determining air density and of the method for determining an air buoyancy correction, respectively.

The core element is the controller 3 that is configured, in particular programmed, to carry out the steps of these methods.

The controller 3 is in communication with the GUI 4 for receiving or initiating receipt of the values of the mass artefact 11, the second weight piece 12 (at least in embodiments in which the second weight piece 12 is not an integral part of the weighing system 1 with stored values) and, if an air buoyancy correction for a sample is to be determined, for the sample needed for determining air density and the air buoyancy correction.

The controller 3 is further in communication with read-out electronics of the weighing pan 2. Thereby, a weighing value of a weight piece arranged on the weighing pan 2 can be received by the controller 3. The artefact 11, the second weight piece 12 and the sample are example of weight pieces that may be arranged on the weighing pan 2 for determining a (absolute or relative) weighing value.

The controller 5 is further in communication with a memory 5 for retrieving stored values, such as constants or stored values of the mass artefact 11 or the second weight piece 12.

In embodiments, in particular in automated embodiments, the weighing system 1 comprises further data communication means 6. Thereby, the controller may receive information stored on a remote memory 5, such as constants or stored values of the mass artefact 11 or the second weight piece 12.

The optional data communication means 6 may further be used for the GUI 4 being a remote GUI 4, for example.

An embodiment of the weighing system 1 comprising data communication means 6 for remote elements is indicated in Fig. 3 by dashed lines, wherein a more integral embodiment is indicated by continuous lines.

**Fig. 4** sows a flow chart of an exemplary embodiment of a method for determining air density $\rho_a$.

The method comprises a step S4 of measuring a weighing value (also called "first weighing value" in this text) of an artefact 11 (first weight piece) in the air for which the air density $\rho_a$ is to be calculated. Therefore, the method comprises a step S1 of providing a weighing system 1.

There is no need that the calculations are carried out by a computer. However, a computer-implemented implementation of the method is often favourable. In this case, the provided weighing system 1 may be a weighing system 1 as disclosed with respect to Figs 2 and 3, for example.

It goes without saying, that the provided weighing system 1 needs a sufficient accuracy, for example with respect to its application ranges according to the OIML R111 recommendations.

The method uses two different weight pieces, namely the artefact 11 (first weight piece) and the second weight piece 12 for determining the air density. Further, several characteristic values of the artefact 11 and the second weight piece 12 are needed as input values for a user or a weighing system, in particular its controller 3, being able to determine the air density. Therefore, the embodiment of the method according to Fig. 4 comprises the following steps:

A step S2 of providing a mass artefact 11, for example a mass artefact as disclosed with respect to Fig. 1, and a (paper or electronic) data sheet 31 comprising the mass $m_1$ (also called "first mass value" in this text) and the density $\rho_1$ (also called "first density value" in this text) of the mass artefact 11.

It is sufficient if the mass $m_1$ is the conventional mass of the mass artefact 11 and if it was determined in air.

The data sheet 31 is usually provided by the provider of the artefact 11.

A step S3 of providing a second weight piece 12, for example a reference weight as disclosed with respect to Fig. 1 or a dial weight of the weighing system 1, and the density $\rho_2$ (also called "second density value" in this text) of the second weight piece 12.

The second density value $p_2$ is usually provided by the provider of the second weight piece 12.

As mentioned, an actual weighing value of the artefact 11 is further a needed input value and the method comprises a step S4 of measuring in the air for which the air density is to be determined and using the weighing system 1 a weighing value (also called "first weighing value" in this text) of the artefact 11.

It is an insight of the invention that it is possible to calculate from these input values a value representing the actual air density in a step S5 of determining the air density $\rho_a$, this value being sufficient accurate for the envisaged field of application of the invention (as shown in Fig. 7).

**Fig. 5** shows a more detailed flow chart of an exemplary embodiment of the method according to Fig. 4.

The steps S1 to S3 are as disclosed with respect to Fig. 4.

In the embodiment according to Fig. 5, the weighing value of the artefact 11 ("first weighing value") measured in step S4 is an absolute weighing value $w_1$ of the artefact 11, the absolute weighting value $w_1$ being measured in the air for which the air density is to be determined and using the weighing system 1.

The embodiment shown in Fig. 5 uses then the equation

$$\rho_a = \rho_1 \rho_2 \frac{(m_1 - w_1)}{(m_1 \rho_2 - w_1 \rho_1)} \qquad \text{(II)}$$

or an equivalent thereof in the step S5 of determining the air density $\rho_a$.

In particular, an equation is equivalent to equation (II) if it is derived thereof by simple replacements, for example by using $\rho = m/V$ or by replacing absolute values by relative values.

**Fig. 6** shows a more detailed flow chart of a further exemplary embodiment of the method according to Fig. 4.

The steps S1 and S2 are as disclosed with respect to Fig. 4.

In the embodiment according to Fig. 6, not only the density $\rho_2$ of the second weight piece 12 is provided in the step S3 of providing a second weight piece 12 but also its mass $m_2$ (also called "second mass value" in this text).

Also the second mass value $m_2$ is usually provided by the provider of the second weight piece 12.

In the embodiment according to Fig. 6, the weighing value of the artefact 11 ("first weighing value") measured in step S4 is a relative weighing value with respect to a weighing value of the second weight piece 12, wherein the weighing value of the second weight piece 12 is a weighing value representing the second weight piece 12 in the air for which the air density is to be determined and using the weighing system 1. In other words, a difference value $\Delta w$ between a weighing value of the first weight piece 11 and a weighing value of the second weight piece 12 is measured, wherein the weighing values are measured by the weighing system 1 and represent the corresponding weight piece in the air for which the air density is to be determined.

It goes without saying that there is no need to measure and/or output the absolute weighing value $w_1$ of the artefact 11 or the absolute weighing value $w_2$ of the second weight piece 12. However, in many cases, these absolute values are available after step S4.

The embodiment shown in Fig. 5 uses then the equation

$$\rho_a = \frac{\rho_1 * (\Delta w - m_1) * (\rho_2 - \rho_0) + \rho_2 * m_2 * (\rho_1 - \rho_0)}{(\Delta w - m_1) * (\rho_2 - \rho_0) + m_2 * (\rho_1 - \rho_0)} \qquad \text{(I)}$$

or an equivalent thereof in the step S5 of determining the air density $\rho_a$.

In particular, an equation is equivalent to equation (I) if it is derived thereof by simple replacements, for example by using $\rho = m/V$ or by replacing absolute values by relative values.

**Fig. 7** shows a comparison of values of air density determined by a method according to the invention, namely by the method according to Fig. 6 and using mass artefacts 11 and second weight pieces 12 as shown in Fig. 1, and the 3-quantity-method.

Fig. 7 shows that the air density $\rho_a$ can be determined with the method for determining air density according to the invention with sufficient accuracy. The uncertainties obtained for the method according to the invention (when using aluminium artefacts 11 as disclosed with respect to Fig. 1 and the method according to Fig. 6) are larger than with the "3-quantity-method". Yet, the uncertainties are still small enough, for example for supporting the calibration of $E_1$ class weight pieces.

**Reference signs list**

| | |
|---|---|
| 1 | Weighing system |
| 2 | Weighing pan |
| 3 | Controller |
| 4 | GUI |
| 5 | Memory |
| 6 | Data communication means |
| 11 | First weight piece, mass artefact |
| 12 | Second weight piece |
| 31 | Data sheet |
| S1 | Providing a weighing system |
| S2 | Providing a mass artefact/first weight piece |
| S3 | Providing a second weight piece |
| S4 | Determining a first weighing value |
| S5 | Determining air density |

**Claims**

1. A weighing system (1) being a non-vacuum weighing system and comprising a weighing pan (2) and a controller (3), wherein the controller is configured to receive a set of values, wherein the set of values comprises

   at least two of a first mass value $m_1$ representing the mass of a first weight piece (11), a first density value $\rho_1$ representing the density of the first weight piece, and a first volume value $V_1$ representing the volume of the first weight piece,
   a second density value $\rho_2$ representing the density of a second weight piece (12) and/or a second mass value $m_2$ representing the mass of the second weight piece and a second volume value $V_2$ representing the volume of the second weight piece, and
   a first weighing value that is a weighing value of the first weight piece and that is determined by the weighing system,
   wherein the controller is configured to determine the air density $\rho_a$ from the received set of values,
   **characterized in that** the first weight piece (11) and the second weight piece (12) have the same nominal weight but differ in surface area and volume by being made of different materials that differ in their density.

2. The weighing system (1) according to claim 1, wherein the first weighing value is a difference value $\Delta w$ with respect to a weighing value of the second weight piece (12), wherein the difference value is determined by the weighing system, and
   wherein the controller is configured to determine the air density $\rho_a$ from the received set of values.

3. The weighing system (1) according to claim 2, wherein the set of values comprises

   at least two of the second mass value $m_2$, the second density value $\rho_2$, and the second volume value $V_2$, and wherein the controller (3) is configured to determine the air density $\rho_a$ by using only two of the first mass value $m_1$, the first density value $\rho_1$, and the first volume value $V_1$, two of the second mass value $m_2$, the second density value $\rho_2$, and the second volume value $V_2$, and the difference value $\Delta w$.

4. The weighing system (1) according to claim 2 or 3, wherein the set of values comprises at least two of the second mass value $m_2$, the second density value $\rho_2$, and the second volume value $V_2$, wherein the controller is configured to determine the air density $\rho_a$ using the following equation

$$\rho_a = \frac{\rho_1 * (\Delta w - m_1) * (\rho_2 - \rho_0) + \rho_2 * m_2 * (\rho_1 - \rho_0)}{(\Delta w - m_1) * (\rho_2 - \rho_0) + m_2 * (\rho_1 - \rho_0)} \quad \text{(I)}$$

or an equivalent thereof, wherein $\rho_0$ is 1.2 kg/m$^3$.

**5.** The weighing system (1) according to claim 1, wherein the controller (3) is configured to determine the air density $\rho_a$ by using only two of the first mass value $m_1$, the first density value $\rho_1$, and the first volume value $V_1$, the second density value $\rho_2$ or the second mass value $m_2$ and the second volume value $V_2$, and the first weighing value being an absolute weighing value $w_1$ of the first weight piece (11).

**6.** The weighing system (1) according to claim 1 or 5, wherein the first weighing value is an absolute weighing value $w_1$ of the first weight piece (11) and the controller is configured to determine the air density $\rho_a$ by using the following equation

$$\rho_a = \rho_1 \rho_2 \frac{(m_1 - w_1)}{(m_1 \rho_2 - w_1 \rho_1)} \quad \text{(II)}$$

or an equivalent thereof.

**7.** A method for determining air density, the method comprises:

- a step (S1) of providing a weighing system (1);
- a step (S2) of providing a mass artefact as a first weight piece (11) and at least two of a first mass value $m_1$ representing the mass of the first weight piece, a first density value $\rho_1$ representing the density of the first weight piece, and a first volume value $V_1$ representing the volume of the first weight piece;
- a step (S3) of providing a second weight piece (12) as well as a second density value $\rho_2$ representing the density of the second weight piece (12) and/or a second mass value $m_2$ representing the mass of the second weight piece and a second volume value $V_2$ representing the volume of the second weight piece;
- a step (S4) of determining a first weighing value of the first weight piece using the weighing system, wherein the first weighing value is determined **in** the air for which the air density is to be determined;
- a step (S5) of determining the air density $\rho_a$, wherein the at least two of the first mass value $m_1$, the first density value $p_1$, and the first volume value $V_1$ provided in the step (S2) of providing a mass artefact, the second density value $\rho_2$ and/or the second mass value $m_2$ and the second volume value $V_2$ provided in the step (S3) of providing a second weight piece, and the determined first weighing value are used in the step of determining the air density,

**characterized in that** the first weight piece (11) and the second weight piece (12) have the same nominal weight but differ in surface area and volume by being made of different materials that differ in their density.

**8.** The method according to claim 7, wherein at least one of the following applies:

- the first weight piece is a massive body;
- the second weight piece (12) is a reference weight that is separate from the weighing system (1) or the second weight piece (12) is a weight that is an integral part of the weighing system;
- the first and second weight pieces differ in surface area by a factor of at least 1.1;
- the first mass value $m_1$ is smaller than a maximum capacity of the weighing system (1).

**9.** The method according to claim 7 or 8, wherein the step (S4) of determining a first weighing value comprises determining a difference value $\Delta w$ with respect to a weighing value of the second weight piece (12), wherein the difference value is determined using the weighing system (1), and wherein the difference value is used in the step (S5) of determining the air density.

**10.** The method according to claim 9, wherein the step (S3) of providing a second weight piece (12) comprises providing at least two of the second mass value $m_2$, the second density value $\rho_2$, and the second volume value $V_2$, and wherein only two of the first mass value $m_1$, the first density value $\rho_1$, and the first volume value $V_1$, two of the second mass value $m_2$, the second density value $\rho_2$, and the second volume value $V_2$, and the difference value $\Delta w$ are used in the step (S5) of determining the air density.

**11.** The method according to claim 9 or 10, wherein the step (S3) of providing a second weight piece (12) comprises providing at least two of the second mass value $m_2$, the second density value $\rho_2$, and the second volume value $V_2$, and wherein the following equation or an equivalent thereof is used in the step (S5) of determining the air density $\rho_a$

$$\rho_a = \frac{\rho_1 * (\Delta w - m_1) * (\rho_2 - \rho_0) + \rho_2 * m_2 * (\rho_1 - \rho_0)}{(\Delta w - m_1) * (\rho_2 - \rho_0) + m_2 * (\rho_1 - \rho_0)} \qquad (I)$$

wherein $\rho_0$ is 1.2 kg/m$^3$.

**12.** The method according to claim 7 or 8, wherein only two of the first mass value $m_1$, the first density value $\rho_1$, and the first volume value $V_1$, the second density value $\rho_2$ or the second mass value $m_2$ and the second volume value $V_2$, and the first weighing value being an absolute weighing value $w_1$ of the first weight piece (11) are used in the step (S5) of determining the air density.

**13.** The method according to one of claims 7, 8 or 12, wherein the following equation or an equivalent thereof is used in the step (S5) of determining the air density $\rho_a$

$$\rho_a = \rho_1 \rho_2 \frac{(m_1 - w_1)}{(m_1 \rho_2 - w_1 \rho_1)} \qquad (II)$$

**14.** A set for use **in** a method according to one of claims 7-13, wherein the set comprises a mass artefact (11) and a data sheet (31) of the mass artefact, wherein the data sheet comprises a first mass value $m_1$ representing the mass of the mass artefact, and a first density value $\rho_1$ representing the density of the mass artefact, wherein the first mass value is determined **in** air, **characterized in that** a nominal mass of the mass artefact (11) corresponds to a nominal mass of at least one of a reference weight and a dial weight, wherein the volume and surface area of the mass artefact differ from the volume and surface area of the reference weight or dial weight having the same nominal mass by being made of a material that differs **in** its density from the density of the material the reference weight or dial weight is made of.

**15.** The set according to claim 14, wherein at least one of the following applies:

- the mass artefact (11) is a massive body;
- the mass artefact (11) is made of a material different from stainless steel and Pt-Ir.

## Patentansprüche

**1.** Wägesystem (1), das ein Nicht-Vakuum-Wägesystem ist und das eine Waagschale (2) und eine Steuerung (3) umfasst, wobei die Steuerung konfiguriert ist, einen Satz von Werten zu empfangen, wobei der Satz von Werten umfasst:

wenigstens zwei von einem ersten Massenwert $m_1$, der die Masse eines ersten Wägestücks (11) darstellt, einem ersten Dichtewert $\rho_1$, der die Dichte des ersten Wägestücks darstellt, und einem ersten Volumenwert $V_1$, der das Volumen des ersten Wägestücks darstellt,
einen zweiten Dichtewert $\rho_2$, der die Dichte eines zweiten Wägestücks (12) darstellt, und/oder einen zweiten Massenwert $m_2$, der die Masse des zweiten Wägestücks darstellt, und einen zweiten Volumenwert $V_2$, der das Volumen des zweiten Wägestücks darstellt, und
einen ersten Wägewert, der ein Wägewert des ersten Wägestücks ist und der vom Wägesystem bestimmt wird, wobei die Steuerung konfiguriert ist, die Luftdichte $\rho_a$ aus dem empfangenen Satz von Werten zu bestimmen, **dadurch gekennzeichnet, dass** das erste Wägestück (11) und das zweite Wägestück (12) gleiches Nenngewicht aufweisen, sich jedoch in Oberfläche und Volumen unterscheiden, indem sie aus unterschiedlichen Materialien, die sich in ihrer Dichte unterscheiden, gefertigt sind.

**2.** Wägesystem (1) nach Anspruch 1, wobei der erste Wägewert ein Differenzwert $\Delta w$ bezüglich eines Wägewertes des zweiten Wägestücks (12) ist, wobei der Differenzwert vom Wägesystem bestimmt wird, und
wobei die Steuerung konfiguriert ist, die Luftdichte $\rho_a$ aus dem empfangenen Satz von Werten zu bestimmen.

**3.** Wägesystem (1) nach Anspruch 2, wobei der Satz von Werten

wenigstens zwei vom zweiten Massenwert $m_2$, zweiten Dichtewert $\rho_2$ und zweiten Volumenwert $V_2$ umfasst, und wobei die Steuerung (3) konfiguriert ist, die Luftdichte $\rho_a$ zu bestimmen, indem nur zwei vom ersten Massenwert $m_1$, ersten Dichtewert $\rho_1$ und ersten Volumenwert $V_1$, zwei vom zweiten Massenwert $m_2$, zweiten Dichtewert $\rho_2$ und zweiten Volumenwert $V_2$, sowie dem Differenzwert $\Delta w$ verwendet werden.

**4.** Wägesystem (1) nach Anspruch 2 oder 3, wobei der Satz von Werten wenigstens zwei vom zweiten Massenwert $m_2$, zweiten Dichtewert $\rho_2$ und zweiten Volumenwert $V_2$ umfasst, wobei die Steuerung konfiguriert ist, die Luftdichte $\rho_a$ unter Verwendung der folgenden Gleichung

$$\rho_a = \frac{\rho_1 * (\Delta w - m_1) * (\rho_2 - \rho_0) + \rho_2 * m_2 * (\rho_1 - \rho_0)}{(\Delta w - m_1) * (\rho_2 - \rho_0) + m_2 * (\rho_1 - \rho_0)} \quad \text{(I)}$$

oder eines Äquivalents davon zu bestimmen, wobei $\rho_0$ 1,2 kg/m$^3$ beträgt.

**5.** Wägesystem (1) nach Anspruch 1, wobei die Steuerung (3) konfiguriert ist, die Luftdichte $\rho_a$ zu bestimmen, indem nur zwei vom ersten Massenwert $m_1$, ersten Dichtewert $\rho_1$ und ersten Volumenwert $V_1$, der zweite Dichtewert $\rho_2$ oder der zweite Massenwert $m_2$ und der zweite Volumenwert $V_2$, sowie der erste Wägewert, der ein absoluter Wägewert $w_1$ des ersten Wägestücks (11) ist, verwendet werden.

**6.** Wägesystem (1) nach Anspruch 1 oder 5, wobei der erste Wägewert ein absoluter Wägewert $w_1$ des ersten Wägestücks (11) ist und die Steuerung konfiguriert ist, die Luftdichte $\rho_a$ unter Verwendung der folgenden Gleichung

$$\rho_a = \rho_1 \rho_2 \frac{(m_1 - w_1)}{(m_1 \rho_2 - w_1 \rho_1)} \quad \text{(II)}$$

oder eines Äquivalents davon zu bestimmen.

**7.** Verfahren zur Bestimmung der Luftdichte, wobei das Verfahren umfasst:

- **einen** Schritt (S1) des Bereitstellens eines Wägesystems (1);
- **einen** Schritt (S2) des Bereitstellens eines Massenartefakts als ein erstes Wägestück (11) und von wenigstens zwei von einem ersten Massenwert $m_1$, der die Masse des ersten Wägestücks darstellt, einem ersten Dichtewert $\rho_1$, der die Dichte des ersten Wägestücks darstellt, und einem ersten Volumenwert $V_1$, der das Volumen des ersten Wägestücks darstellt;
- **einen** Schritt (S3) des Bereitstellens eines zweiten Wägestücks (12) sowie eines zweiten Dichtewertes $\rho_2$, der die Dichte des zweiten Wägestücks (12) darstellt, und/oder eines zweiten Massenwertes $m_2$, der die Masse des zweiten Wägestücks darstellt, und eines zweiten Volumenwertes $V_2$, der das Volumen des zweiten Wägestücks darstellt;
- **einen** Schritt (S4) des Bestimmens eines ersten Wägewertes des ersten Wägestücks unter Verwendung des Wägesystems, wobei der erste Wägewert in der Umgebungsluft bestimmt wird, für die die Luftdichte zu bestimmen ist;
- **einen** Schritt (S5) des Bestimmens der Luftdichte $\rho_a$, wobei die wenigstens zwei vom ersten Massenwert $m_1$, ersten Dichtewert $\rho_1$ und ersten Volumenwert $V_1$, die im Schritt (S2) des Bereitstellens eines Massenartefakts bereitgestellt werden, der zweite Dichtewert $\rho_2$ und/oder der zweite Massenwert $m_2$ und der zweite Volumenwert $V_2$, die im Schritt (S3) des Bereitstellens eines zweiten Wägestücks bereitgestellt werden, und der bestimmte erste Wägewert im Schritt des Bestimmens der Luftdichte verwendet werden,

**dadurch gekennzeichnet, dass** das erste Wägestück (11) und das zweite Wägestück (12) gleiches Nenngewicht aufweisen, sich jedoch in Oberfläche und Volumen unterscheiden, indem sie aus unterschiedlichen Materialien, die sich in ihrer Dichte unterscheiden, gefertigt sind.

**8.** Verfahren nach Anspruch 7, wobei wenigstens eines der folgenden zutrifft:

- **das** erste Wägestück ist ein massiver Körper;
- **das** zweite Wägestück (12) ist ein Referenzgewicht, das vom Wägesystem (1) getrennt ist, oder das zweite Wägestück (12) ist Gewicht, das ein integraler Bestandteil des Wägesystems ist;
- **das** erste und zweite Wägestücke unterscheiden sich in ihrer Oberfläche um einen Faktor von wenigstens 1,1;

• **der** erste Massenwert $m_1$ ist kleiner als eine maximale Kapazität des Wägesystems (1).

**9.** Verfahren nach Anspruch 7 oder 8, wobei der Schritt (S4) des Bestimmens eines ersten Wägewertes das Bestimmen eines Differenzwertes $\Delta w$ bezüglich eines Wägewertes des zweiten Wägestücks (12) umfasst, wobei der Differenzwert unter Verwendung des Wägesystems (1) bestimmt wird, und wobei der Differenzwert im Schritt (S5) des Bestimmens der Luftdichte verwendet wird.

**10.** Verfahren nach Anspruch 9, wobei der Schritt (S3) des Bereitstellens eines zweiten Wägestücks (12) das Bereitstellen von wenigstens zwei vom zweiten Massenwert $m_2$, zweiten Dichtewert $\rho_2$ und zweiten Volumenwert $V_2$ umfasst, und wobei nur zwei vom ersten Massenwert $m_1$, ersten Dichtewert $\rho_1$ und ersten Volumenwert $V_1$, zwei vom zweiten Massenwert $m_2$, zweiten Dichtewert $\rho_2$ und zweiten Volumenwert $V_2$, und der Differenzwert $\Delta w$ im Schritt (S5) des Bestimmens der Luftdichte verwendet werden.

**11.** Verfahren nach Anspruch 9 oder 10, wobei der Schritt (S3) des Bereitstellens eines zweiten Wägestücks (12) das Bereitstellen von wenigstens zwei vom zweiten Massenwert $m_2$, zweiten Dichtewert $\rho_2$ und zweiten Volumenwert $V_2$ umfasst, und wobei folgende Gleichung oder ein Äquivalent davon im Schritt (S5) des Bestimmens der Luftdichte $\rho_a$ verwendet wird,

$$\rho_a = \frac{\rho_1 * (\Delta w - m_1) * (\rho_2 - \rho_0) + \rho_2 * m_2 * (\rho_1 - \rho_0)}{(\Delta w - m_1) * (\rho_2 - \rho_0) + m_2 * (\rho_1 - \rho_0)} \quad (I)$$

wobei $\rho_0$ 1,2 kg/m$^3$ beträgt.

**12.** Verfahren nach Anspruch 7 oder 8, wobei nur zwei vom ersten Massenwert $m_1$, ersten Dichtewert $\rho_1$ und ersten Volumenwert $V_1$, der zweite Dichtewert $\rho_2$ oder der zweite Massenwert $m_2$ und der zweite Volumenwert $V_2$, sowie der erste Wägewert, der ein absoluter Wägewert $w_1$ des ersten Wägestücks (11) ist, im Schritt (S5) des Bestimmens der Luftdichte verwendet werden.

**13.** Verfahren nach einem der Ansprüche 7, 8 oder 12, wobei folgende Gleichung oder ein Äquivalent davon im Schritt (S5) des Bestimmens der Luftdichte $\rho_a$ verwendet wird

$$\rho_a = \rho_1 \rho_2 \frac{(m_1 - w_1)}{(m_1 \rho_2 - w_1 \rho_1)} \quad (II)$$

**14.** Set zur Verwendung in einem Verfahren nach einem der Ansprüche 7-13, wobei das Set ein Massenartefakt (11) und ein Datenblatt (31) des Massenartefakts umfasst, wobei das Datenblatt einen ersten Massenwert $m_1$, der die Masse des Massenartefakts darstellt, und einen ersten Dichtewert $\rho_1$, der die Dichte des Massenartefakts darstellt, umfasst, wobei der erste Massenwert in Luft bestimmt wurde, **dadurch gekennzeichnet, dass** eine Nennmasse des Massenartefakts (11) einer Nennmasse eines Referenzgewichts und/oder eines Schaltgewichts entspricht, wobei Volumen und Oberfläche des Massenartefakts sich von Volumen und Oberfläche des Referenzgewichts oder Schaltgewichts mit gleicher Nennmasse unterscheiden, indem es aus einem Material hergestellt ist, das sich in seiner Dichte von der Dichte des Materials unterscheidet, aus dem das Referenzgewicht oder das Schaltgewicht hergestellt ist.

**15.** Set nach Anspruch 14, wobei wenigstens eines der folgenden zutrifft:

• das Massenartefakt (11) ist ein massiver Körper;
• das Massenartefakt (11) ist aus einem anderem Material als Edelstahl und Pt-Ir hergestellt.

## Revendications

**1.** Système de pesée (1) qui est un système de pesée sans vide et qui comprend un plateau de pesée (2) et un contrôleur (3), le contrôleur est configuré pour recevoir un ensemble de valeurs et l'ensemble de valeurs comprend

au moins deux d'une première valeur de masse $m_1$ représentant la masse d'une première pièce de poids (11), d'une première valeur de masse volumique $\rho_1$ représentant la masse volumique de la première pièce de poids, et d'une première valeur de volume $V_1$ représentant le volume de la première pièce de poids,

une seconde valeur de masse volumique $\rho_2$ représentant la masse volumique d'une seconde pièce de poids (12) et/ou une seconde valeur de masse $m_2$ représentant la masse de la seconde pièce de poids et une seconde valeur de volume $V_2$ représentant le volume de la seconde pièce de poids, et
une première valeur de pesée qui est une valeur de pesée de la première pièce de poids et qui est déterminée par le système de pesée,
dans lequel le contrôleur est configuré pour déterminer la masse volumique de l'air $\rho_a$ à partir de l'ensemble de valeurs reçues,
**caractérisé en ce que** la première pièce de poids (11) et la seconde pièce de poids (12) ont le même poids nominal mais diffèrent en superficie et en volume parce qu'elles sont constituées de matériaux différents qui diffèrent en masse volumique.

2. Système de pesée (1) selon la revendication 1, dans lequel la première valeur de pesée est une valeur de différence $\Delta w$ par rapport à une valeur de pesée de la seconde pièce de poids (12), la valeur de différence étant déterminée par le système de pesée, et dans lequel le contrôleur est configuré pour déterminer la masse volumique de l'air $\rho_a$ à partir de l'ensemble de valeurs reçues.

3. Système de pesée (1) selon la revendication 2, dans lequel l'ensemble de valeurs comprend

au moins deux de la seconde valeur de masse $m_2$, de la seconde valeur de masse volumique $\rho_2$ et de la seconde valeur de volume $V_2$, et
dans lequel le contrôleur (3) est configuré pour déterminer la masse volumique de l'air $\rho_a$ en utilisant seulement deux de la première valeur de masse $m_1$, de la première valeur de masse volumique $\rho_1$ et de la première valeur de volume $V_1$, deux de la seconde valeur de masse $m_2$, de la seconde valeur de masse volumique $\rho_2$ et de la seconde valeur de volume $V_2$, et la valeur de différence $\Delta w$.

4. Système de pesée (1) selon la revendication 2 ou 3, dans lequel l'ensemble de valeurs comprend au moins deux de la seconde valeur de masse $m_2$, de la seconde valeur de masse volumique $\rho_2$ et de la seconde valeur de volume $V_2$, dans lequel le contrôleur est configuré pour déterminer la masse volumique de l'air $\rho_a$ à l'aide de l'équation suivante

$$\rho_a = \frac{\rho_1 * (\Delta w - m_1) * (\rho_2 - \rho_0) + \rho_2 * m_2 * (\rho_1 - \rho_0)}{(\Delta w - m_1) * (\rho_2 - \rho_0) + m_2 * (\rho_1 - \rho_0)} \quad \text{(I)}$$

ou un équivalent de celle-ci, où $\rho_0$ est de 1,2 kg/m$^3$.

5. Système de pesée (1) selon la revendication 1, dans lequel le contrôleur (3) est configuré pour déterminer la masse volumique de l'air $\rho_a$ en utilisant seulement deux de la première valeur de masse $m_1$, de la première valeur de masse volumique $\rho_1$ et de la première valeur de volume $V_1$, la seconde valeur de masse volumique $\rho_2$ ou la seconde valeur de masse $m_2$ et la seconde valeur de volume $V_2$, et la première valeur de pesée étant une valeur de pesée absolue $w_1$ de la première pièce de poids (11).

6. Système de pesée (1) selon la revendication 1 ou 5, dans lequel la première valeur de pesée est une valeur de pesée absolue $w_1$ du premier poids (11) et le contrôleur est configuré pour déterminer la masse volumique de l'air $\rho_a$ en utilisant l'équation suivante :

$$\rho_a = \rho_1 \rho_2 \frac{(m_1 - w_1)}{(m_1 \rho_2 - w_1 \rho_1)} \quad \text{(II)}$$

ou un équivalent de celle-ci.

7. Procédé de détermination de la masse volumique de l'air, le procédé comprenant :

- une étape (S1) de fourniture d'un système de pesée (1) ;
- une étape (S2) de fourniture d'un artefact de masse comme première pièce de poids (11) et d'au moins deux d'une première valeur de masse $m_1$ représentant la masse de la première pièce de poids, d'une première valeur de masse volumique $\rho_1$ représentant la masse volumique de la première pièce de poids, et d'une première valeur de volume $V_1$ représentant le volume de la première pièce de poids ;
- une étape (S3) de fourniture d'une seconde pièce de poids (12) ainsi qu'une seconde valeur de masse

volumique $\rho_2$ représentant la masse volumique de la seconde pièce de poids (12) et/ou une seconde valeur de masse $m_2$ représentant la masse de la seconde pièce de poids et une seconde valeur de volume $V_2$ représentant le volume de la seconde pièce de poids ;

• une étape (S4) de détermination d'une première valeur de pesée de la première pièce de poids à l'aide du système de pesée, la première valeur de pesée étant déterminée dans l'air pour lequel la masse volumique de l'air doit être déterminée ;

• une étape (S5) de détermination de la masse volumique de l'air $\rho_a$ en utilisant les au moins deux de la première valeur de masse $m_1$, de la première valeur de masse volumique $\rho_1$ et de la première valeur de volume $V_1$ fournies à l'étape (S2) de fourniture d'un artefact de masse, la seconde valeur de masse volumique $\rho_2$ et/ou la seconde valeur de masse $m_2$ et la seconde valeur de volume $V_2$ fournies à l'étape (S3) de fourniture d'une seconde pièce de poids, et la première valeur de pesée déterminée, **caractérisé en ce que** la première pièce de poids (11) et la seconde pièce de poids (12) ont le même poids nominal mais diffèrent en superficie et en volume parce qu'elles sont constituées de matériaux différents qui diffèrent en masse volumique.

**8.** Procédé selon la revendication 7, dans lequel au moins l'une des conditions suivantes s'applique :

• la première pièce de poids est un corps massif ;

• la seconde pièce de poids (12) est un poids de référence qui est séparé du système de pesée (1) ou la seconde pièce de poids (12) est un poids qui fait partie intégrante du système de pesée ;

• la première pièce de poids et la seconde pièce de poids diffèrent en superficie d'un facteur d'au moins 1,1 ;

• la première valeur de masse $m_1$ est inférieure à une capacité maximale du système de pesée (1).

**9.** Procédé selon la revendication 7 ou 8, dans lequel l'étape (S4) de détermination d'une première valeur de pesée comprend la détermination d'une valeur de différence $\Delta w$ par rapport à une valeur de pesée de la seconde pièce de poids (12), la valeur de différence étant déterminée à l'aide du système de pesée (1) et la valeur de différence étant utilisée dans l'étape (S5) de détermination de la masse volumique de l'air.

**10.** Procédé selon la revendication 9, dans lequel l'étape (S3) de fourniture d'une seconde pièce de poids (12) comprend la fourniture d'au moins deux de la seconde valeur de masse $m_2$, de la seconde valeur de masse volumique $\rho_2$ et de la seconde valeur de volume $V_2$, et dans lequel seulement deux de la première valeur de masse $m_1$, de la première valeur de masse volumique $\rho_1$ et de la première valeur de volume $V_1$, deux de la seconde valeur de masse $m_2$, de la seconde valeur de masse volumique $\rho_2$ et de la seconde valeur de volume $V_2$, et la valeur de différence $\Delta w$ sont utilisées dans l'étape (S5) de détermination de la masse volumique de l'air.

**11.** Procédé selon la revendication 9 ou 10, dans lequel l'étape (S3) de fourniture d'une seconde pièce de poids (12) comprend la fourniture d'au moins deux de la seconde valeur de masse $m_2$, de la seconde valeur de masse volumique $\rho_2$ et de la seconde valeur de volume $V_2$, et dans lequel l'équation suivante ou un équivalent de celle-ci est utilisée dans l'étape (S5) de détermination de la masse volumique de l'air $\rho_a$

$$\rho_a = \frac{\rho_1 * (\Delta w - m_1) * (\rho_2 - \rho_0) + \rho_2 * m_2 * (\rho_1 - \rho_0)}{(\Delta w - m_1) * (\rho_2 - \rho_0) + m_2 * (\rho_1 - \rho_0)} \qquad \text{(I)}$$

où $\rho_0$ est 1,2 kg/m$^3$.

**12.** Procédé selon la revendication 7 ou 8, dans lequel seulement deux de la première valeur de masse $m_1$, de la première valeur de masse volumique $\rho_1$ et de la première valeur de volume $V_1$, la seconde valeur de masse volumique $\rho_2$ ou la seconde valeur de masse $m_2$ et la seconde valeur de volume $V_2$, et la première valeur de pesée étant une valeur de pesée absolue $w_1$ de la première pièce de poids (11) sont utilisées à l'étape (S5) pour déterminer la masse volumique de l'air.

**13.** Procédé selon l'une des revendications 7, 8 ou 12, dans lequel l'équation suivante ou un équivalent de celle-ci est utilisée dans l'étape (S5) de détermination de la masse volumique de l'air $\rho_a$

$$\rho_a = \rho_1 \rho_2 \frac{(m_1 - w_1)}{(m_1 \rho_2 - w_1 \rho_1)} \qquad \text{(II)}$$

**14.** Ensemble pour une utilisation dans un procédé selon l'une des revendications 7 à 13, l'ensemble comprend un artefact de masse (11) et une feuille de données (31) de l'artefact de masse, la feuille de données comprenant une première valeur de masse $m_1$ représentant la masse de l'artefact de masse, et une première valeur de masse volumique $\rho_1$ représentant la masse volumique de l'artefact de masse, la première valeur de masse étant déterminée dans l'air, **caractérisé en ce qu'**une masse nominale de l'artefact de masse (11) correspond à une masse nominale d'au moins l'un d'un poids de référence et d'un poids commutable, et **en ce que** le volume et la superficie de l'artefact de masse se diffèrent du volume et de la superficie du poids de référence ou du poids commutable ayant la même masse nominale parce que l'artefact de masse est constitué d'un matériau dont la masse volumique se diffère de la masse volumique du matériau dont le poids de référence ou le poids commutable est constitué.

**15.** Ensemble selon la revendication 14, dans lequel au moins l'une des conditions suivantes s'applique :

- l'artefact de masse (11) est un corps massif ;
- l'artefact de masse (11) est constitué d'un matériau différent de l'acier inoxydable et du Pt-Ir.

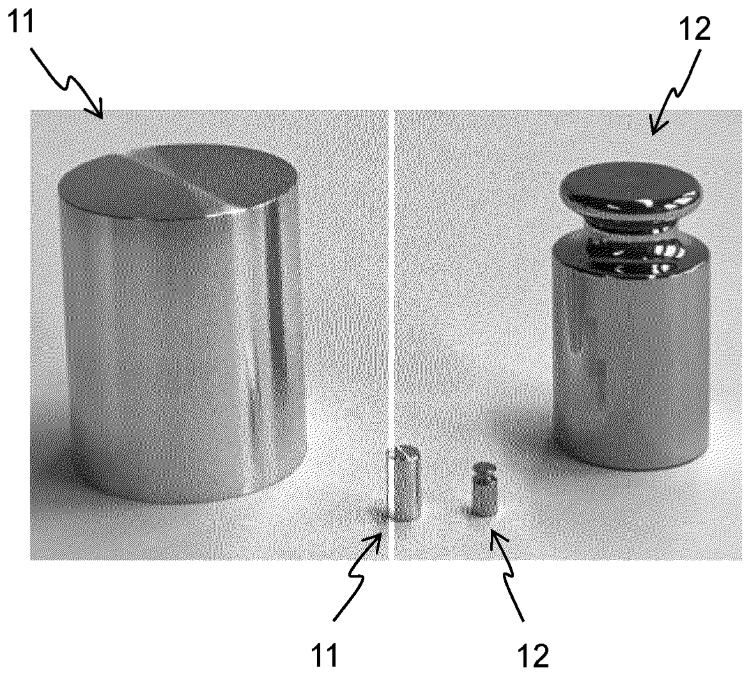


Fig. 1

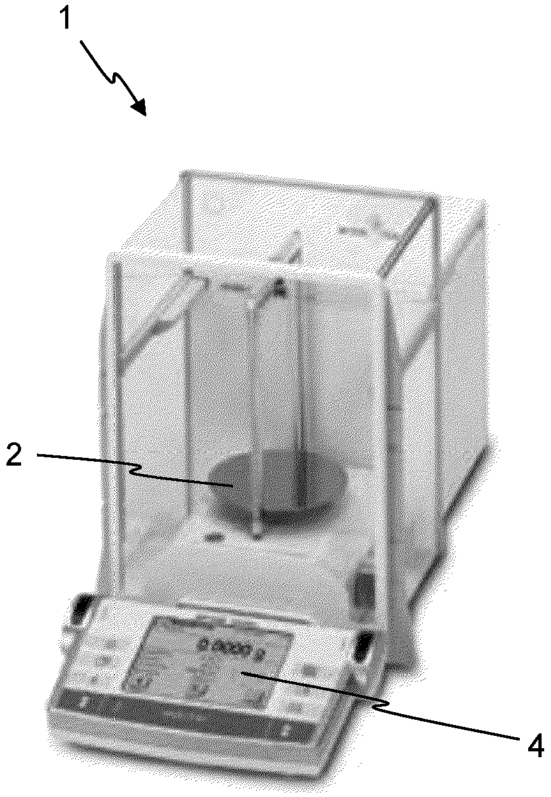


Fig. 2

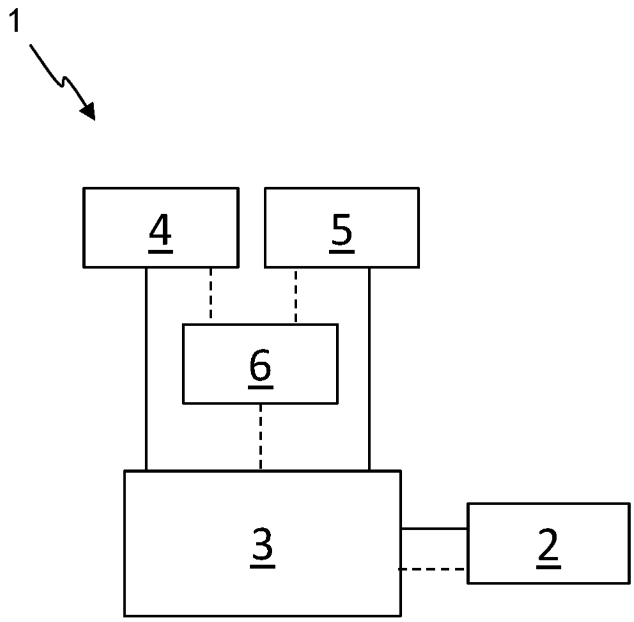


Fig. 3

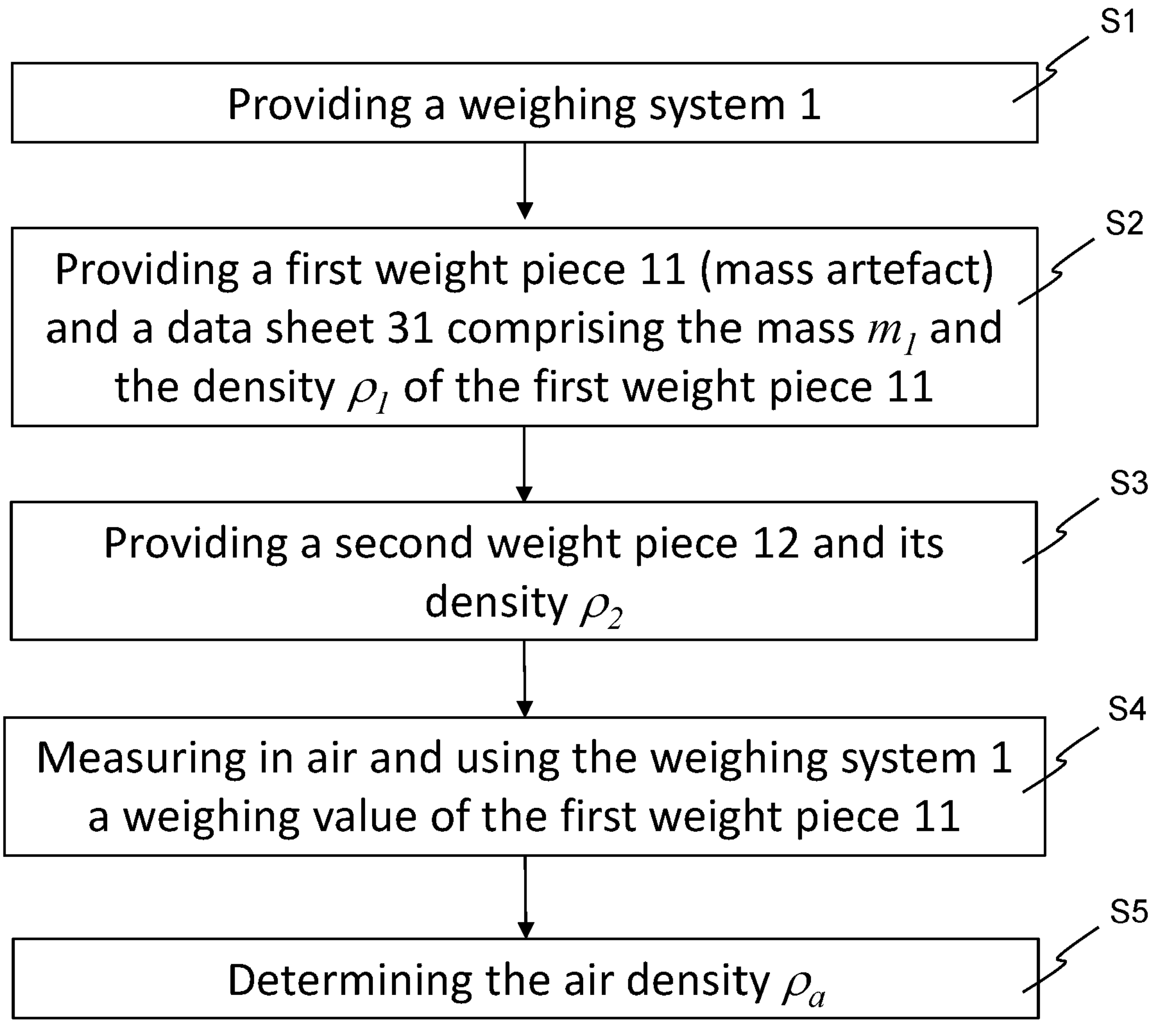
S1
Providing a weighing system 1
S2
Providing a first weight piece 11 (mass artefact) and a data sheet 31 comprising the mass $m_1$ and the density $\rho_1$ of the first weight piece 11
S3
Providing a second weight piece 12 and its density $\rho_2$
S4
Measuring in air and using the weighing system 1 a weighing value of the first weight piece 11
S5
Determining the air density $\rho_a$

Fig. 4

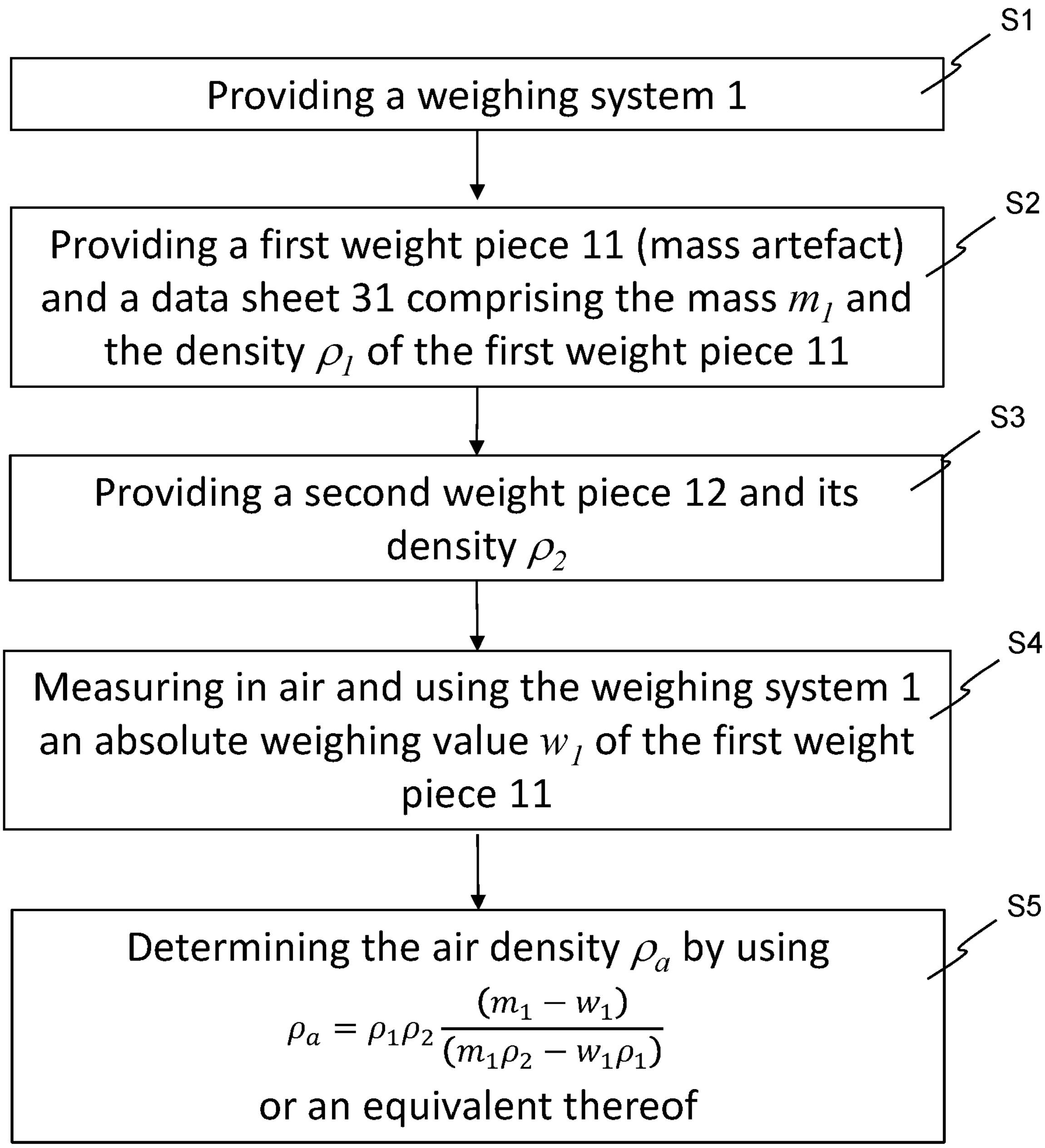
S1
Providing a weighing system 1
S2
Providing a first weight piece 11 (mass artefact) and a data sheet 31 comprising the mass $m_1$ and the density $\rho_1$ of the first weight piece 11
S3
Providing a second weight piece 12 and its density $\rho_2$
S4
Measuring in air and using the weighing system 1 an absolute weighing value $w_1$ of the first weight piece 11
S5
Determining the air density $\rho_a$ by using
$\rho_a = \rho_1 \rho_2 \frac{(m_1 - w_1)}{(m_1 \rho_2 - w_1 \rho_1)}$
or an equivalent thereof

Fig. 5

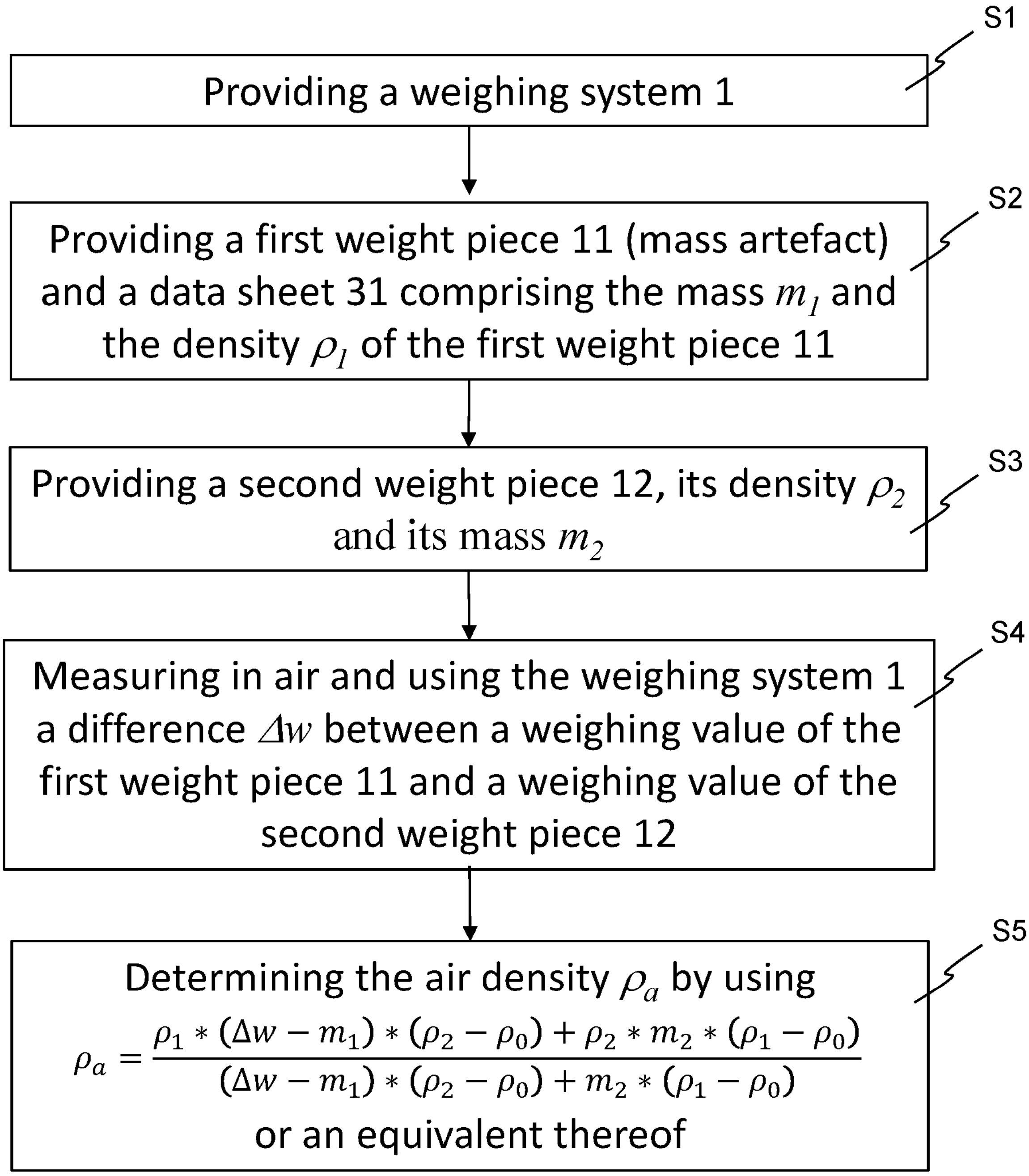
S1
Providing a weighing system 1
S2
Providing a first weight piece 11 (mass artefact) and a data sheet 31 comprising the mass $m_1$ and the density $\rho_1$ of the first weight piece 11
S3
Providing a second weight piece 12, its density $\rho_2$ and its mass $m_2$
S4
Measuring in air and using the weighing system 1 a difference $\Delta w$ between a weighing value of the first weight piece 11 and a weighing value of the second weight piece 12
S5
Determining the air density $\rho_a$ by using
$$\rho_a = \frac{\rho_1 * (\Delta w - m_1) * (\rho_2 - \rho_0) + \rho_2 * m_2 * (\rho_1 - \rho_0)}{(\Delta w - m_1) * (\rho_2 - \rho_0) + m_2 * (\rho_1 - \rho_0)}$$
or an equivalent thereof

**Fig. 6**

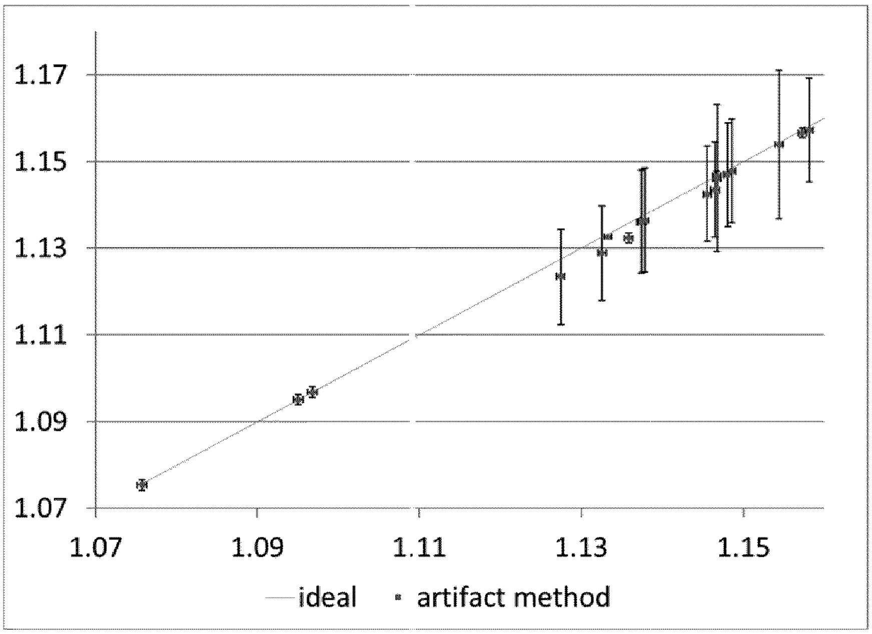
1.17
1.15
1.13
1.11
1.09
1.07
1.07
1.09
1.11
1.13
1.15
ideal
artifact method

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20160252388 A1
- KR 20180011377 A
- JP S63145922 A
- CN 105258778 A
- DE 4223981 A1


### Non-patent literature cited in the description


- *OIML R*, 2004, 111-1
- **ANNEX E**. *OIML R*, 2004, 111-1
- Comprehensive Mass Metrology. Viley-VCH, 2000
- **A. PICARD** ; **H. FANG**. Three methods of determining the density of moist air during mass comparisons. *Metrologia*, 2002, vol. 39, 31-40
- **J. BERRY** ; **S. DAVIDSON** ; **S. BROWN**. NPL Report Eng 1: The development of artefacts for the gravimetric measurement of the density of moist air. *NPL*, 2007
- NIST SOP-2 (2019) publication: Recommended Standard Operating Procedure for Applying Air Buoyancy Correction. **M. BORYS et al.** Fundamentals of Mass Determination. Springer, 2012